# NEUE EUROPÄISCHE PATENTSCHRIFT

(11) **EP 1 165 333 B2**
(45) Veröffentlichungstag und Bekanntmachung des Hinweises auf die Entscheidung über den Einspruch: **07.06.2006**
(45) Hinweis auf die Patenterteilung: 03.12.2003
(21) Anmeldenummer: 01911488.3
(22) Anmeldetag: 17.01.2001
(51) Int. Cl.: B60G 17/052, B60G 17/033

(54) **LUFTFEDERSYSTEM FÜR EIN KRAFTFAHRZEUG**
PNEUMATIC SYSTEM FOR A MOTOR VEHICLE
SYSTEME D'AMORTISSEUR PNEUMATIQUE POUR UN VEHICULE AUTOMOBILE

(30) Priorität: 04.02.2000 DE 10004880
(43) Veröffentlichungstag der Anmeldung: 02.01.2002
(73) Patentinhaber: Bayerische Motoren Werke Aktiengesellschaft, 80809 München (DE)
(72) Erfinder: SCHOOP, Reimar, 80637 München (DE); JURR, Reinhold, 81247 München (DE)
(86) Internationale Anmeldenummer: PCT/EP2001/000443
(87) Internationale Veröffentlichungsnummer: WO 2001/056820

(56) Entgegenhaltungen:
- EP-A- 0 224 663
- DE-A- 2 942 081
- DE-A- 3 439 309
- DE-A- 3 919 438
- DE-A- 4 235 111
- DE-A- 19 640 149
- DE-C- 3 515 017
- DE-C- 3 523 266
- DE-C- 3 742 022
- GB-A- 2 331 494
- US-A- 4 625 994
- US-A- 5 159 554
- US-A- 5 393 087
- US-A- 5 452 919
- "Elektromagnete" von Kallenbach/Eick/Quendt;Stuttgart:Teubner 1994, Seiten 1 bis 10 und 321 bis 345.

## Beschreibung

Die Erfindung betrifft ein Luftfedersystem für ein Kraftfahrzeug mit einer Kompressoreinheit, einer Speichereinheit sowie Schaltventilen, über die die einzelnen Luftfedern der einzelnen Fahrzeugräder mit Druckluft versorgt werden, wobei im Bereich zwischen der Kompressoreinheit und den Schaltventilen eine in der Atmosphäre mündende, durch ein Sperrventil absperrbare oder freischaltbare Entlüftungsleitung vorgesehen ist. Zum technischen Umfeld wird lediglich beispielshalber auf die gattungsgemässe DE 29 42 081 C2 verwiesen.

Luftfedersysteme zeigen sich gegenüber allein mechanisch abgefederten Radaufhängungen durch höhere Flexibilität bzw. größere Variabilitäten aus. Bei Zweiachs-Luftfedersystem kann bspw. die Höhenlage des Fahrzeugaufbaus gegenüber dem Boden und damit die Bodenfreiheit des Kraftfahrzeuges verändert werden. Üblicherweise kommen dabei sog. offene Luftfedersysteme zum Einsatz, bei denen (bei Zweiachs-Luftferdersystemen) im Falle eines Absenkens des Fahrzeugaufbaus aus einer angehobenen Position die aus den Luftfedern hierfür abzuführende Luftmasse über eine sog. Entlüftungsleitung in die Atmosphäre, d. h. in die Umgebung abgeführt wird. Soll dieses Absenken binnen eines relativ kurzen Zeitraumes erfolgen, so muß der Querschnitt, genauer der freie Durchströmquerschnitt der üblicherweise in der Nähe der Kompressoreinheit des Luftfedersystemes vorgesehenen und mittels eines Sperrventiles absperrbaren oder freischaltbaren Entlüftungsleitung eine gewisse Mindestgröße besitzen.

In diesem Zusammenhang sei ausdrücklich darauf hingewiesen, daß die vorliegende Erfindung nicht auf Zweiachs-Luftfedersysteme beschränkt ist, sondern gleichermaßen auch bei Einachs-Luftfedersystemen Anwendung finden kann. Femer sei erwähnt, daß der stromauf der noch geschlossenen Schaltventile und somit in den Luftfedern anliegende statische Luftdruck in der Größenordnung von 4 bis 10 bar liegen kann, wobei die dynamischen Druckwerte deutlich höher liegen können. Auch der gesamte Systemdruck ist üblicherweise höher, nämlich bis zur Höhe des Druckes in einer Speichereinheit.

Neben einer Kompressoreinheit, mit Hilfe derer der für eine Befüllung der besagten Luftfedern benötigte Systemdruck bzw. die hierfür benötigte Luftmasse letztendlich bereitgestellt wird, ist üblicherweise noch eine bereits kurz genannte Speichereinheit vorgesehen, in welcher von der Kompressoreinheit komprimierte Luftmasse zwischengespeichert wird, da ein vernünftig dimensionierter Kompressor nicht in der Lage wäre, die für ein gewünschtes Anheben des Fahrzeugaufbaus benötigte Luftmasse binnen eines vertretbaren Zeltraumes bereitzustellen. Wenn dann der Fahrzeugaufbau angehoben werden soll, kann aus der bevorzugt vollständig gefüllten Speichereinheit die hierfür benötigte und unter ausreichendem Systemdruck stehende Luftmasse entnommen werden.

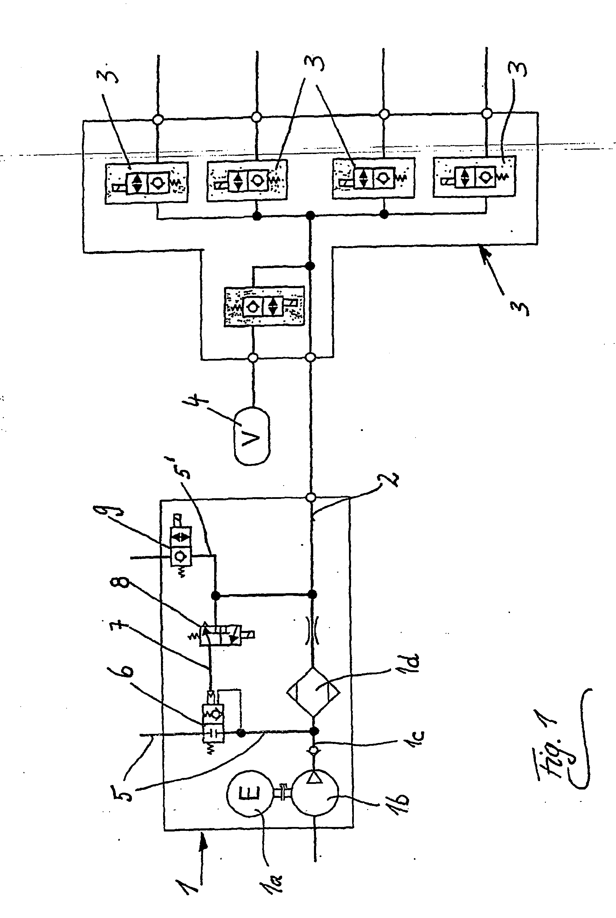

Aus dieser Erläuterung wird klar, daß der in der gefüllten Speichereinheit herrschende Druck größer sein muß als der üblicherweise in den Luftfedern änliegende Druck, da andemfalls eine weitere Befüllung derselben nicht möglich wäre. Beispielsweise kann der in der gefüllten Speichereinheit herrschende Druck in der Größenordnung von 15 bar liegen. Offensichtlich ist weiterhin, daß die Kompressoreinheit nach vollständigem Befüllen der Speichereinheit stillgesetzt werden kann, solange aus dieser keine Luftmasse entnommen wird. In diesem Zustand ist es erwünscht, den im zugehörigen Leitungssystem, d.h. im Leitungssystem zwischen der Kompressoreinheit sowie den genannten Schaltventilen, die bspw. zu einem sog. Ventilblock zusammengefaßt sein können und auf deren der Kompressoreinheit abgewandten Seite die einzelnen Luftfedern angeschlossen sind, anliegenden Druck abzubauen, d.h. dieses Leitungssystem zu belüften oder entlüften. Eine Entlüftung dieses Leitungssystemes, d.h. der Kompressoreinheit sowie des Leitungsabschnittes zwischen der Kompressoreinheit und dem Ventilblock bzw. den Schaltventilen (selbstverständlich ohne die von diesem Leitungszweig abzweigende und absperrbare Speichereinheit), ist dabei grundsätzlich über die bereits genannte, im Bereich zwischen der Kompressoreinheit und dem Ventilblock vorgesehene Entlüftungsleitung möglich.
Es hat sich jedoch gezeigt, daß diese Be- oder Entlüftung bzw. Entspannung des zunächst unter dem bereits beispielhaft genannten (höheren) Druck von 15 bar stehenden Systemes über diese Entlüftungsleitung mit einer unerwünschten, praktisch nicht mehr akzeptablen Geräuschentwicklung einhergeht. Quasi schlagartig wird dann nämlich über diese Entlüftungsleitung, über die bei einem gewünschten Absenken des Fahrzeugaufbaus ausgehend von einem Druckniveau von bspw. 4 - 10 bar lediglich ein Teil der im System enthaltenen Luftmasse abgeführt wird, das demgegenüber höhere Druckniveau von bspw. 15 bar abgebaut. Nun könnte zwar in der Entlüftungsleitung ein Schalldämpfer oder dgl. vorgesehen werden, jedoch stellt dieser eine stets und daher auch im Falle eines Absenkens des Fahrzeugaufbaus vorhandene, unerwünschtermaßen wirksame Drossel dar.
Eine demgegenüber günstigere Abhilfemaßnahme für die soeben geschilderte Problematik aufzuzeigen, ist Aufgabe der vorliegenden Erfindung.
Zur Lösung dieser Aufgabe sind die in den nebengeordneten unabhängigen Ansprüchen 1 oder 2 oder 4 enthaltenen Merkmale vorgesehen.
Grundsätzlich ist also die Masse des durch die Entlüftungsleitung geführten Luftstromes begrenzbar (was nach der DE-C-3523266 bereits bekannter Stand der Technik ist) und nun dann, wenn der Druck im System zwischen der Kompressoreinheit und dem Ventilblockes bzw. den Schaltventilen abgebaut werden soll, d.h. nachdem die Speichereinheit vollständig befüllt wurde. Damit dieser - wie geschildert - relativ hohe Druck nicht schlagartig (und dabei unter Geräuschentwicklung) über die Entlüftungsleitung abgebaut wird, soll für diese Fälle die innerhalb eines gewissen Zeitintervalles durch die Entlüftungsleitung gelangende Luftmasse, d.h. der Luftmassenstrom in seiner/ihrer Größe beschränkbar sein. Hingegen soll dann, wenn der Fahrzeugaufbau abgesenkt und demzufolge ein Teil der in den Luftfedern befindlichen Luftmasse ebenfalls über diese Entlüftungsleitung in die Atmosphäre abgeführt wird, keine derartige Beschränkung oder Begrenzung bestehen, d.h. dann soll der vollständige Strömungsquerschnitt der Entlüftungsleitung zur Verfügung stehen, um ein relativ schnelles Absenken des Fahrzeugaufbaus zu ermöglichen.
Grundsätzlich bestehen verschiedene Möglichkeiten für eine wahlweise Beschränkung oder Freigabe, d.h. Aufhebung dieser Beschränkung oder Begrenzung des innerhalb einer gewissen Zeitspanne durch die Entlüftungsleitung führbaren Luftmassenstromes. So könnte bspw. über eine umschaltbare Verzweigung wahlweise ein Schalldämpfer in die Entlüftungsleitung eingebunden werden, jedoch benötigt diese Lösung relativ viel Bauraum.
Demgegenüber günstigere Maßnahmen sind in den einzelnen Ansprüchen aufgezeigt und werden im folgenden anhand der beigefügten **Figuren 1 - 3,** in denen Schaltpläne bevorzugter Ausführungsbeispiele der vorliegenden Erfindung dargestellt sind, weiter erläutert. In sämtlichen Figuren sind dabei gleiche Elemente mit den gleichen Bezugsziffern bezeichnet.

Mit der Bezugsziffer 1 ist die Kompressoreinheit eines Luftfedersystemes eines Kraftfahrzeuges bezeichnet, die aus einem von einem Elektromotor 1a angetriebenen Kompressor 1 b sowie einem in dessen Druckleitung 1 c angeordneten Trockner 1d besteht. Über eine Saugleitung 1e angesaugte Luft wird im Kompressor 1b verdichtet und über die Druckleitung 1c sowie einen sich daran anschließenden Leitungsabschnitt 2 einem nicht weiter dargestellten Ventilblock 3 zugeführt. Von diesem Ventilblock3 aus, in dem einzelne den einzelnen Luftfedern zugeordnete Schaltventile - für diese wird ebenfalls die Bezugsziffer 3 verwendet - zusammengefaßt sind, kann diese verdichtete Luft schaltbar in eine Speichereinheit 4 oder direkt in nicht dargestellte Luftfedern, die den Rädern des Kraftfahrzeuges zugeordnet sind, gelangen. Wie weiter oben bereits erläutert wurde, wird der Ventilblock 3 bzw. die Schaltventile 3 bei einer gewünschten weiteren Befüllung dieser Luftfedern (insbesondere zum Anheben des Fahrzeugaufbaus) dabei derart geschaltet, daß insbesondere die in der gefüllten Speichereinheit 4 befindliche Luftmasse den Luftfedern zugeführt wird.

Bei einer gewünschten teilweisen Entleerung der Luftfedern (insbesondere zum Absenken des Fahrzeugaufbaus) wird die Luft jedoch nicht in die Speichereinheit 4 zurückgeführt, sondern über eine Entlüftungsleitung 5 in die Umgebung abgeführt. Diese Entlüftungsleitung 5 befindet sich hier im. Bereich der Kompressoreinheit 1, d.h. die Entlüftungsleitung 5 zweigt hier von der Druckleitung 1c ab, kann aber ebenso vom Leitungsabschnitt 2 abzweigen. Selbstverständlich ist in der Entlüftungsleitung 5 ein Sperrventil 6 vorgesehen bzw. erforderlich, um zu gewährleisten, daß nur dann Luft aus dem System in die Umgebung gelangen kann, wenn dies tatsächlich erwünscht ist.

Dabei wird - wie aus den obigen Erläuterungen hervorgeht - über diese Entlüftungsleitung 5 nicht nur dann Luft aus dem System in die Umgebung abgeführt, wenn aus den Luftfedern ein Teil der darin befindlichen Luft entnommen werden soll, sondern auch dann, wenn nach Befüllung der Speichereinheit 4 bei geschlossenem Ventilblock 3 der Leitungsabschnitt 2 sowie die Kompressoreinheit 1 belüftet werden soll.

Bei sämtlichen Ausführungsbeispielen ist das in der Entlüftungsleitung 5 vorgesehene Sperrventil 6 als druckgesteuertes Ventil ausgebildet, d.h. das Sperrventil 6 kann durch den zwischen der Kompressoreinheit 1 und dem Ventilblock 3 herrschenden Systemdruck geöffnet werden. Hierzu zweigt vom Leitungsabschnitt 2 eine Vorsteuerleitung 7 ab, In der ein bevorzugt als Elektromagnetventil ausgebildetes Steuerventil 8 vorgesehen ist und die an die Steuerseite des Sperrventiles 6 angelegt ist. Demzufolge wird grundsätzlich bei geöffnetem Steuerventil 8 das Sperrventil 6 solange geöffnet bzw. offengehalten, bis der Druck im im Leitungsabschnitt 2 sowie in der Kompressoreinheit 1 auf den sog. Schwellwert des Sperrventiles 6, bspw. nahezu auf Umgebungsdruck, abgefallen ist.

Beim Ausführungsbeispiel nach **Figur 1** ist der separat mittels des Sperrventiles 6 absperrbaren hier sog. Haupt-Entlüftungsleitung 5 eine mittels eines sog. Entlüftungsventiles, 9 ebenfalls, separat absperrbare Hochdruck-Entlüftungsleitung 5' parallel geschaltet, deren freier Durchströmquerschnitt geringer als derjenige der Haupt-Entlüftungsleitung 5 ist. Diese Entlüftungsleitung 5' zweigt hier von der Vorsteuerleitung 7 stromauf des Steuerventiles 8 ab, kann jedoch ebenso direkt vom Leitungsabschnitt 2 abzweigen. Der soeben genannte freie Durchströmquerschnitt der hier beiden Entlüftungsleitungen 5, 5' wird dabei jeweils durch einen engsten Querschnitt, d.h. durch eine sog. Engstelle in diesen Entlüftungsleitungen bestimmt. Zumeist definiert dabei der freie Durchströmquerschnitt des jeweiligen in der Entlüftungsleitung 5 bzw. 5'vorgesehenen Ventiles (Sperrventil 6 bzw. Entlüftungsventil 9) diesen freien Durchströmquerschnitt.

Soll nun ein Teil der Luftmasse aus den (nicht dargestellten) Luftfedern abgezogen werden, so gelangt dieser wie üblich bei geeignet geschaltetem Ventilblock 3 über den Leitungsabschnitt 2 in die Entlüftungsleitung 5 sowie in die Vorsteuerleitung 7, so daß bei geschlossenem Entlüftungsventil 9 durch Öffnen des Steuerventiles 8 das Sperrventil 6 geöffnet wird und diese Luftmasse über die Entlüftungsleitung 5 in die Umgebung gelangen kann. Da eine relativschnelle Luftabfuhr erwünscht ist, besitzt die Entlüftungsleitung 5 bzw. das offene Sperrventil 6 einen dementsprechend großen freien Strömungsquerschnitt.

Soll hingegen bei gesperrtem, d.h. geschlossenem Ventilblock3 nach Befüllung der Speichereinheit 4 der Leitungsabschnitt 2 sowie die Kompressoreinheit 1 belüftet werden, wie dies weiter oben bereits beschrieben wurde, so bleibt das Steuerventil 8 geschlossen Geöffnet hingegen wird dann das Entlüftungsventli 9, so daß die im besagten Leitungsabschnitt 2 unter Überdruck gegenüber der Atmosphäre befindliche Luftmasse über die dann freigeschaltete Hochdruck-Entlüftungsleitung 5' in die Umgebung gelangen kann. Der bevorzugt durch den freien Querschnitt des geöffneten Entlüftungsventiles definierte freie Durchströmquerschnitt dieser Entlüftungsleitung 5' ist dabei derart gering gewählt, daß dieser von einem hohen Druckniveau (nämlich den bereits beispielhaft genannten 15 bar) aus erfolgende Druckabbau verzögert und daher ohne eine unerwünschte Geräuschentwicklung einhergeht.

Die im Falle einer Entlüftung des Leitungsabschnittes 2 sowie der Kompressoreinheit 1 abzuführende Luftmasse ist zumeist erheblich geringer als diejenige, die im Falle eines Absenkens des Fahrzeugaufbaus aus den Luftfedern in die Umgebung abgeführt werden muß. Trotz des gegenüberder Haupt-Entlüftungsleitung 5 erheblich geringeren freien Durchströmquerschnittes der Hochdruck-Entlüftungsleitung 5' erfolgt daher die Entlüftung des Leitungsabschnittes 2 über diese quasi gedrosselte Hochdruck-Entlüftungsleitung 5' binnen einer vertretbar kurzen Zeitspanne. Im übrigen kann nach Ablauf einer geringen Zeitspanne, nachdem bereits die absoluten Druck-Spitzenwerte abgebaut sind, das Entlüftungsventil 9 geschlossen und das Steuerventil 8 geöffnet werden, so daß die weitere Rest-Enttüftung über die Haupt-Entlüftungsleitung 5 erfolgt. Wegen der bereits erfolgten Druckreduktion ist dann keiner störende Geräuschentwicklung zu befürchten.

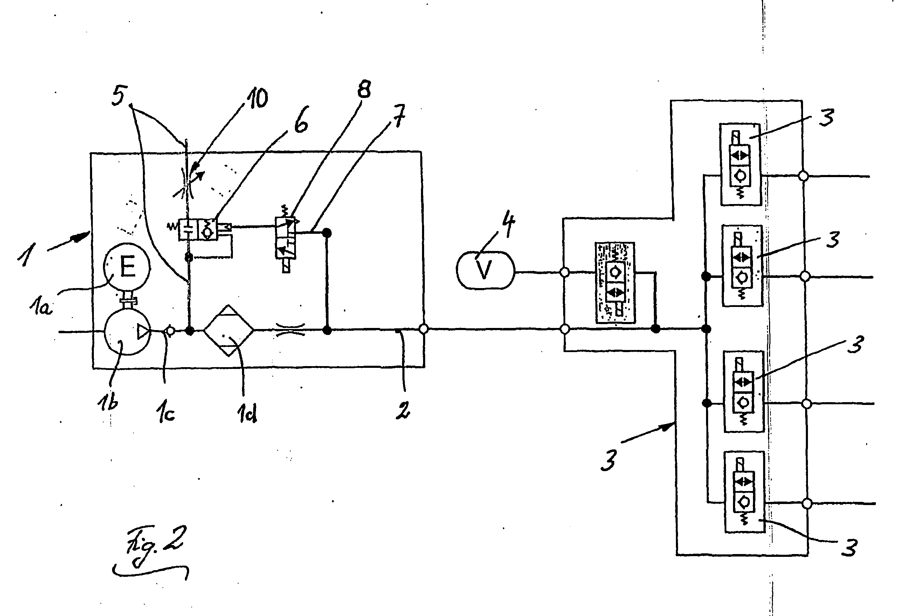

Beim Ausführungsbeispiel nach **Figur 2** ist in der einzigen Entlüftungsleitung5 ein Drosselelement 10 vorgesehen, mit Hilfe dessen der freie Durchströmquerschnitt der durch ein Öffnen des Sperrventiles freigeschalteten Entlüftungsleitung 5 beschränkbar ist. Grundsätzlich kann dieses Drosselelement 10 durch eine nicht gezeigte Stelleinrichtung geeignet eingestellt werden, d.h. bei einem gewünschten Absenken des Fahrzeugaufbaus und damit zusammenhängender Luftmassenabfuhr aus den Luftfedern über die Entlüftungsleitung 5 nach außen wird deren freier Durchströmquerschnitt maximiert, d.h. die Drosselwirkung des variablen Drosselelementes 10 wird minimiert. Hingegen wird bei einer gewünschten Entlüftung des Leltungsabschnittes 2 sowie der Kompressoreinheit 1 bei abgesperrtem Ventilblock 3 die Drosselwirkung des Drosselelementes 10 maximiert, um den freien Durchströmquerschnitt der Entlüftungsleitung 5 zu minimieren. Auch mit dieser Maßnahme wird somit im letztgenannten Betriebszustand die eingangs geschilderte unerwünschte Geräuschentwicklung vermieden.

Im Sinne einer vorteilhaften Weiterbildung kann das Drosselelement 10 derart ausgebildet sein, daß es den freien Durchströmquerschnitt der Entlüftungsleitung 5 in Abhängigkeit vom stromauf des Drosselelementes 10 herrschenden Druckniveau selbsttätig variabel beschränkt. Die im letzten Absatz genannte Stelleinrichtung wird dann nicht benötigt. Bei Anliegen hohen Druckes im Falle einer gewünschten Entlüftung des Systemes (wie bereits beispielhaft genannt in der Größenordnung von 15 bar) wird der freie Durchströmquerschnitt der Entlüftungsleitung 5 somit selbsttätig, d. h. automatisch begrenzt, während bei niedrigerem Druck (beispielsweise in der Größenordnung von 9 bar) der maximal mögliche Durchtrittsquerschnitt freigegeben wird, da dann ohnehin die unerwünschte Geräuschentwicklung nicht mehr auftritt.

in **Figur 2** sind für die beiden beschriebenen Varianten des variablen Drosselelementes 10 keine konstruktiven Ausführungsformen angegeben, da derartige variable Drosselelemente bekannt sind bzw. relativ einfach gestaltet werden können. Ein sich selbsttätig wie gewünscht einstellendes variables Drosselelement kann bspw. einen den freien Durchströmquerschnitt der Entlüftungsleitung 5 mehr oder weniger beschränkenden Schieber aufweisen, der einerseits federbelastet ist und andererseits eine vom Druck stromauf des Drosselelementes 10 beaufschlagte Steuerfläche aufweist. Bei hohe. Druckwerten stromauf des Drosselelementes 10 wird dieser Schieber durch den auf die besagte Steuerfläche einwirkenden Druck gegen die Kraft des Federelementes in eine den freien Durchströmquerschitt relativ stark beschränkende Position bewegt, wohingegen bei niedrigen Druckwerten stromauf des Drosselelementes 10 dieser Schieber durch die Kraft des Federelementes in eine praktisch nicht drosselnde, d.h. den Durchströmquerschnitt des Entlüftungsleitung 5 mehr oder weniger vollständig freigebende Position bewegt wird.

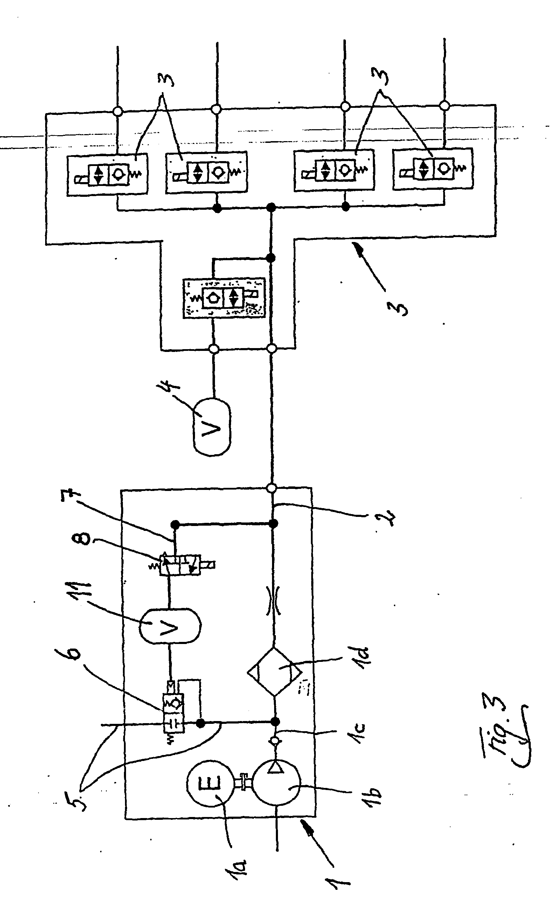

Auch beim Ausführungsbeispiel nach **Figur 3** ist lediglich eine einzige Entlüftungsleitung 5 vorhanden. Für die Funktionsweise dieses Ausführungsbeispieles ist es - anders als bei den zuvor erläuterten Ausführungsbeispielen wesentlich, daß das in der Entlüftungsleitung 5 vorgesehene Sperrventil 6 durch den im Bereich der Kompressoreinheit herrschenden und überdie bereits erläuterte Vorsteuerleitung 7 angelegten Systemdruck geöffnet wird. Dabei ist stromauf des Sperrventiles 6 sowie stromab des Steuerventiles 8 in oder an der Vorsteuerleitung 5 ein sog Entspannungsvolumen 11 vorgesehen. Konkret dargestellt ist eine Ausführungsform, bei der das Entspannungsvolumen 11 direkt in der Vorsteuerleitung 7 liegt, in einer alternativen Ausführungsform kann dieses Enstpannungsvolumen 11 über eine Stichleitung von der Vorsteuerleitung 7 abzweigen (nicht gezeigt).

Die Funktionsweise dieses Ausführungsbeispieles nach Figur 3 ist wie folgt: Es wurde bereits erwähnt, daß die im Falle einer Entlüftung des Leitungsabschnittes 2 sowie der Kompressoreinheit 1 abzuführende Luftmasse erheblich geringer ist als diejenige, die im Falle eines Absenkens des Fahrzeugaufbaus aus den Luftfedern in die Umgebung abgeführtwerden muß. Geht es also um eine Entlüftung des Leitungsabschnittes 2 - wie bereits erwähnt ausgehend von einem relativ hohen Druckniveau bspw. In der Größenordnung von 15 bar -, so dehnt sich nach einem Öffnen des Steuerventiles 8 diese unter Hochdruck stehende Luftmasse in das gegenüber dem Rauminhalt der Vorsteuerleitung 7 erheblich größere Entspannungsvolumen 11 hinein aus. Ehe somit das druckgesteuerte Sperrventil 6 überhaupt geöffnet wird, erfolgte über das Entspannungsvolumen 11 bereits ein derartiger Druckabbau (bspw. auf das bei einem Absenken des Fahrzeugaufbaus übliche Niveau von 4 - 10 bar), daß nach einem Öffnen des Sperrventiles 6 die eingangs genannte und mit der vorliegenden Erfindung zu vermeidende Geräuschentwicklung überhaupt nicht mehr auftreten kann. Auch hier ist somit aufgrund des Druckabbaus im Entspannungsvolumen der nach einem Öffnen des Sperrventiles 6 durch die freigeschaltete Entlüftungsleitung 5 strömende Luftmassenstrom beschränkt.

Praktisch ohne Einfluß bleibt dieses Entspannungsvolumen 11 bei einem gewünschten Absenken des Fahrzeugaufbaus, da die dann über die Entlüftungsleitung 5 abzuführende Luftmasse so groß ist, daß deren geringfügige Teil-Entspannung im Entspannungsvolumen, 11 vernachlässigbar ist. Somit zeichnet sich dieses Ausführungsbeispiel nach Figur 3 durch einen besonders einfachen Aufbau aus, wobei noch darauf hingewiesen sein daß selbstverständlich eine Vielzahl von Details durchaus abweichend von den erläuterten Ausführungsbeispielen gestaltet sein kann, ohne den Inhalt der Patentansprüche zu verlassen.

### Bezugszeichenliste:

- 1: Kompressoreinheit
- 1 a: Elektromotor
- 1 b: Kompressor
- 1 c: Druckleitung
- 1 d: Trockner
- 2: Leitungsabschnitt
- 3: Ventilblock / Schaltventil(e)
- 4: Speichereinheit
- 5: (Haupt-) Entlüftungsleitung
- 5': Hochdruck-Entlüftungsleitung
- 6: Sperrventil
- 7: Vorsteuerleitung
- 8: Steuerventil
- 9: Entlüftungsventil
- 10: Drosselelement
- 11: Entspannungsvolumen

## Patentansprüche

1. Luftfedersystem für ein Kraftfahrzeug mit einer Kompressoreinheit (1), einer Speichereinheit (4) sowie Schaltventilen (3), über die die einzelnen Luftfedern der einzelnen Fahrzeugräder mit Druckluft versorgt werden, wobei zwischen der Kompressoreinheit (1) und den Schaltventilen (3) eine in der Atmosphäre mündende, durch ein Sperrventil (6) absperrbare oder freischaltbare Entlüftungsleitung (5) vorgesehen ist,
**dadurch gekennzeichnet, dass** der bei geschlossenen Schaltventilen (3) sowie befüllter Speichereinheit (4) über die freigeschaltete Entlüftungsleitung (5) in einem gewissen Zeitintervall austretende Luftmassenstrom gegenüber einem unbegrenzten Zustand, der im Falle zumindest eines geöffneten Schaltventils (3) vorliegt, beschränkt ist, wozu einer separat absperrbaren Haupt-Entlüftungsleitung (5) eine Hochdruck-Entlüftungsleitung (5'), die mit einem Entlüftungsventil (9) separat absperrbar ist, parallel geschaltet ist, wobei der freie Durchströmquerschnitt dieses Entlüftungsventils (9) geringer ist als derjenige der Haupt-Entlüftungsleitung (5).

2. Luftfedersystem für ein Kraftfahrzeug mit einer Kompressoreinheit (1), einer Speichereinheit (4) sowie Schaltventilen (3), über die die einzelnen Luftfedern der einzelnen Fahrzeugräder mit Druckluft versorgt werden, wobei zwischen der Kompressoreinheit (1) und den Schaltventilen (3) eine in der Atmosphäre mündende, durch ein Sperrventil (6) absperrbare oder freischaltbare Entlüftungsleitung (5) vorgesehen ist,
**dadurch gekennzeichnet, dass** der bei geschlossenen Schaltventilen (3) sowie befüllter Speichereinheit (4) über die freigeschaltete Entlüftungsleitung (5) in einem gewissen Zeitintervall austretende Luftmassenstrom mittels eines in der Entlüftungsleitung (5) vorgesehenen Drosselelementes (10), dessen freier Durchströmquerschnitt beschränkbar ist, gegenüber einem unbegrenzten Zustand, der im Falle zumindest eines geöffneten Schaltventils (3) vorliegt, beschränkt ist.

3. Luftfedersystem nach Anspruch 2,
**dadurch gekennzeichnet, daß** das Drosselelement (10) den freien Durchströmquerschnitt der Entlüftungsleitung (5) in Abhängigkeit vom stromauf des Drosselelementes (10) herrschenden Druckniveau selbsttätig variabel beschränkt.

4. Luftfedersystem für ein Kraftfahrzeug mit einer Kompressoreinheit (1), einer Speichereinheit (4) sowie Schaltventilen (3), über die die einzelnen Luftfedern der einzelnen Fahrzeugräder mit Druckluft versorgt werden, wobei zwischen der Kompressoreinheit (1) und den Schaltventilen (3) eine in der Atmosphäre mündende, durch ein Sperrventil (6) absperrbare oder freischaltbare Entlüftungsleitung (5) vorgesehen ist,
**dadurch gekennzeichnet, dass** der bei geschlossenen Schaltventilen (3) sowie befüllter Speichereinheit (4) über die freigeschaltete Entlüftungsleitung (5) in einem gewissen Zeitintervall austretende Luftmassenstrom gegenüber einem unbegrenzten Zustand, der im Falle zumindest eines geöffneten Schaltventils (3) vorliegt, beschränkt ist, wobei das in der Entlüftungsleitung (5) vorgesehene Sperrventil (6) durch den zwischen der Kompressoreinheit (1) und den Schaltventilen (3) herrschenden und über eine Vorsteuerleitung (7) angelegten Systemdruck geöffnet wird, und wobei zwischen dem Sperrventil (6) und einem Steuerventil (8) in oder an der Vorsteuerleitung (7) ein Entspannungsvolumen (11) vorgesehen ist.

## Claims

1. A pneumatic shock-absorption system for a motor vehicle, comprising a compressor unit (1), a storage unit (4) and switching valves (3) through which the individual pneumatic springs on the individual wheels of the vehicle are supplied with compressed air, wherein a vent line (5) which opens to atmosphere and can be blocked or opened by a shut-off valve (6) is provided between the compressor unit (1) and the switching valve (3),
**characterised in that** the flow rate of air in a given time interval escaping through the opened vent line (5) when the switching valves (3) are closed and the storage unit (4) is filled is restricted as compared with an unlimited state in the case where at least one switching valve (3) is opened, to which end a separately blockable main vent line (5) is connected in parallel with a high-pressure vent line (5') separately blockable by a vent valve (9), wherein the free flow cross-section of the vent valve (9) is less than that of the main vent valve (5).

2. A pneumatic shock-absorption system for a motor vehicle, comprising a compressor unit (1), a storage unit (4) and switching valves (3) through which the individual pneumatic springs on the individual wheels of the vehicle are supplied with compressed air, wherein a vent line (5) which opens to atmosphere and can be blocked or opened by a shut-off valve (6) is provided between the compressor unit (1) and the switching valve (3),
**characterised in that** the flow rate of air in a given time interval escaping through the opened vent line (5) when the switching valves (3) are closed and the storage unit (4) is filled is restrictable by a throttle element (10) provided in the vent line (5) and having a free flow cross-section which can be restricted relative to an unlimited state in the case where at least one switching valve (3) is open.

3. A pneumatic system according to claim 2, **characterised in that** the throttle element (10) limits the free flow cross-section of the vent line (5) automatically in dependence on the pressure upstream of the throttle element (10).

4. A pneumatic shock-absorption system for a motor vehicle, comprising a compressor unit (1), a storage unit (4) and switching valves (3) through which the individual pneumatic springs on the individual wheels of the vehicle are supplied with compressed air, wherein a vent line (5) which opens to atmosphere and can be blocked or opened by a shut-off valve (6) is provided between the compressor unit (1) and the switching valve (3),
**characterised in that** the air flow rate in a given time interval escaping through the opened vent line (5) when the switching valves (3) are closed and the storage unit (4) is filled is restricted compared with an unlimited state in the case where at least one switching valve (3) is opened, wherein the blocking valve (6) provided in the vent line (5) is opened by the system pressure prevailing between the compressor unit (1) and the switching valves (3) and applied through a pilot line (7) and wherein an expansion chamber (11) is provided between the shut-off valve (6) and a control valve (8) in or on the pilot line (7).

## Revendications

1. Système d'amortisseur pneumatique pour un véhicule automobile présentant un bloc compresseur (1), un bloc accumulateur (4) ainsi que des vannes de commutation (3) via lesquels chaque amortisseur pneumatique de chaque roue du véhicule automobile est alimenté en air comprimé, moyennant quoi on prévoit entre le bloc compresseur (1) et les vannes de commutation (3) une conduite de dégagement d'air (5) débouchant dans l'atmosphère et pouvant être ouverte ou bloquée par une vanne d'arrêt (6),
**caractérisé en ce que**
le débit massique d'air sortant pendant un intervalle de temps donné par la conduite de dégagement d'air (5) libérée lorsque les vannes de commutation (3) sont fermées et que le bloc accumulateur (4) est rempli, est limité par rapport à un état sans limite au cas où une vanne de commutation (3) est ouverte, en branchant en parallèle à une conduite de dégagement d'air principale (5) blocable séparément une conduite de dégagement d'air haute pression (5') blocable séparément par une vanne de purge d'air (9), la section libre de passage de cette vanne de purge (9) étant plus faible que celle de la conduite de dégagement d'air principale (9).

2. Système d'amortisseur pneumatique pour un véhicule automobile présentant un bloc compresseur (1), un bloc accumulateur (4) ainsi que des vannes de commutation (3) via lesquels chaque amortisseur pneumatique de chaque roue du véhicule automobile est alimenté en air comprimé, moyennant quoi on prévoit entre le bloc compresseur (1) et les vannes de commutation (3) une conduite de dégagement d'air (5) débouchant dans l'atmosphère et pouvant être ouverte ou bloquée par une vanne d'arrêt (6),
**caractérisé en ce que**
le débit massique d'air sortant pendant un intervalle de temps donné par la conduite de dégagement d'air (5) libérée lorsque les vannes de commutation (3) sont fermées et que le bloc accumulateur (4) est rempli, est limité par un élément d'étranglement (10) prévu dans la conduite de dégagement d'air (5) et dont la section de passage libre est limitée par rapport à un état sans limite au cas où au moins une vanne de commutation (3) est ouverte.

3. Système d'amortisseur pneumatique selon la revendication 2,
**caractérisé en ce que**
l'élément d'étranglement (10) peut automatiquement limiter de façon variable la section de passage libre de la conduite de dégagement d'air (5) en fonction du niveau de pression régnant en amont de l'élément d'étranglement (10).

4. Système d'amortisseur pneumatique selon pour un véhicule automobile présentant un bloc compresseur (1), un bloc accumulateur (4) ainsi que des vannes de commutation (3) via lesquels chaque amortisseur pneumatique de chaque roue du véhicule automobile est alimenté en air comprimé, moyennant quoi on prévoit entre le bloc compresseur (1) et les vannes de commutation (3) une conduite de dégagement d'air (5) débouchant dans l'atmosphère et pouvant être ouverte ou bloquée par une vanne d'arrêt (6),
**caractérisé en ce que**
le débit massique d'air sortant pendant un intervalle de temps donné par la conduite de dégagement d'air (5) libérée lorsque les vannes de commutation (3) sont fermées et que le bloc accumulateur (4) est rempli, est limité du fait que la vanne d'arrêt (6) prévue dans la conduite de dégagement d'air (5) est ouverte par la pression systémique régnant entre le bloc compresseur (1) et le bloc de vannes (3) et s'exerçant via une conduite pilote (7), avec un volume de détente (11) prévu dans ou sur la conduite pilote (7), entre la vanne d'arrêt (6) et la vanne de commande (8).
